# EUROPEAN PATENT APPLICATION

(11) **EP 3 561 746 A1**
(43) Date of publication of application: **30.10.2019**
(21) Application number: 18215571.3
(22) Date of filing: 21.12.2018
(51) Int. Cl.: G06Q 10/06

(54) **GLOBAL SMART MANUFACTURING, SALE AND SERVICE SYSTEM**

(30) Priority: 26.04.2018 CN 201810386399; 14.08.2018 CN 201810920795
(71) Applicant: Kingtronics Group (Xiamen) Co. Ltd., Xiamen, Fujian 361004 (CN)
(72) Inventor: Tseng, Chee Henry, Xiamen, Fujian 361004 (CN)
(74) Representative: Gong, Jinping

(57) **Abstract**

A global smart manufacturing, sale and service system integrates globalized procurement, payment, smart manufacturing, sales and logistics distribution to realize information interconnection among global supply chains. It allows enterprises to share experiences on smart manufacturing without compromising independence, secrecy and security of their operational information, so as to achieve deep fusion between end customers and manufacturers. It supports real-time adjustment of operational decision-making, and accurately pushes product information to customers, so as to enhance customers' satisfaction and shopping experiences.

## Description

### BACKGROUND OF THE INVENTION

### 1. Technical Field

The present invention relates to a global smart manufacturing, sale and service system according to the preamble of claim 1. Accordingly, the present invention severally relates to global smart manufacturing, sale and service systems, and more particularly to a comprehensive service system that provides procurement, manufacturing, sales, payment, logistics distribution globally with special emphasis on SSMTDSM (Supply Side Management to Demand Side Management).

### 2. Description of Related Art

Among the various existing B2B platforms like the one disclosed in EP1589458A1, many are focused on enterprises' demands on raw materials and supply of products (e.g. 1688.com), without caring for manufacturers' manufacturing processes and end customers, making them defective in terms of logistics and information. These defects lead to increased communication costs at manufacturers' side and make supply chains less efficient.

On the other hand, some existing B2C platforms like the one disclosed in US20150161626A1 merely act as a trade platform between end customers and product suppliers (e.g. Taobao). While such a platform facilitates global sales of products, it pays attention to neither of manufacturing processes and quality management, and lacks for unified global logistic service. The incompleteness of service to the entire supply chain brings about information asymmetry among parties, poor after-service, overrun of counterfeit goods, and logistic problems. Besides, these platforms usually fail to support customization, resulting in unsatisfied customers.

Other existing B2C platforms sale goods through their own on-line shops (e.g. JD.com) and use their self-operated logistic distributing service. They call products to their warehouses at different locations from manufacturers and serve end customers directly. However, without providing manufacturers with comprehensive smart manufacturing service, their service to the entire supply chain is not complete. Since intermediaries filling the gap lead to increased logistics costs and additional commissions, end customers have to pay more for getting products.

Many existing SaaS cloud platforms only provide incomprehensive service. While some of them lack for systematic software service and informatized service related to smart industry, others are focused on smart manufacturing service, wherein different platforms operate independently and information exchange is difficult. None of them covers the entire supply chain from customer requirements to product delivery. This means that manufacturers have increased costs for information communication and have difficulty in making proper operational decisions timely, and that information security and secrecy are not well protected.

In a known supply and marketing system, an end customer places his/her order to an intermediate trader who afterward places his/her order to a manufacturer who afterward places his/her order to a before a part supplier. After materials are prepared, manufacturing can be initiated. The products made are then shipped to the intermediate trader or to the end customer directly as indicated. Shortcomings about the known system include complicated supply chain operations, low efficiency, difficult information sharing, and high procurement costs.

Currently, due to capital limitation and small scale, many small- and medium-sized enterprises (SMEs) are less experienced, less informatized, and less automated in terms of manufacturing, making them pay more for procurement yet get inferior product quality. Lacking in brand benefits and market information prevents them from being aware of and in turn satisfying customer requirements, so their development is limited.

Although some large businesses have their in-house information systems and manufacturing sales systems, these systems are usually isolated from each other. This fact is disfavor to these enterprises' globalization and sharing of smart manufacturing experiences, limiting their growth potential.

To sum up, there is a need for an integrated, comprehensive global service system that addresses the shortcomings of the prior art by covering procurement, manufacturing, sales, payment and logistics distribution.

### SUMMARY OF THE INVENTION

The objective of the present invention is to provide a global smart manufacturing, sale and service system that is informatized, digitized, and smartlized, and integrates globalized procurement, payment, smart manufacturing, sales and logistics distribution as a whole, so as to realize connection and communication among global supply chains in terms of information, and empower enterprises of all sizes by equipping them with the abilities to do global procurement, global sales, and smart manufacturing, while improving global logistics distribution and global payment in terms of efficiency. It allows global enterprises to share their experiences on smart manufacturing without compromising independence, secrecy and security of their operational information, thereby continuously improving product quality, reducing operational costs, realizing deep fusion between end customers and manufacturers, and streamlining supply chains. It also allows global enterprises to make proper decisions in a real-time manner based on big-data analysis, and to accurately push product information to customers, thereby enhancing customers' satisfaction and shopping experiences.

To achieve these and other objects of the present invention, the invention provides a global smart manufacturing, sale and service system according to claim 1. Further embodiments of the invention are described in the dependent claims.

The present invention global smart manufacturing, sale and service system, as described in the claims, comprises a plurality of continuously reproducible and expandable service units, each said service unit constructing and providing a global cellular service network with a cellular architecture that implements global procurement, global manufacturing, and global sale service;
the service unit being composed of global security management systems, global cloud-based smart service platforms, global end customers, global production platforms, global part suppliers, global sale platforms, global logistic execution ends, global payment systems, and global cellular service systems;
the service unit being composed of global security management systems, global cloud-based smart service platforms, global end customers, global production platforms, global part suppliers, global sale platforms, global logistic execution ends, global payment systems, and global cellular service systems;
the service units constructing the global cloud-based smart service platforms based on the global security management systems while ensuring secrecy, security and availability of data, the global cloud-based smart service platforms being docked with the global sale platforms, the global production platforms, the global end customers, the global part suppliers, the global logistic execution ends, and the global payment systems based on cloud data pools with a service-oriented distributed architecture, so as to integrate a complete "from-the-demand-side-to-the- supply-side" supply chain system from the global end customers to respective said independent global production platforms, global part suppliers, global sale platforms, and global logistic execution ends and to integrate the global payment systems enabling global payment; the global cloud-based smart service platforms provides global sale service, global procurement service, global production platform service, global logistic service, global payment service, smart information system service, and software service that are based on SaaS cloud service to the global production platforms through the global sale platforms, the global part suppliers, the global logistic execution ends, and the global payment systems; the global cloud-based smart service platform providing formation, operation & maintenance and on-/off-line comprehensive service of the global cloud-based smart service platforms through the global cellular service systems; the global cloud-based smart service platforms continuously performing self-evolution, continuously improving their global supply chain efficiency, continuously improving their smart manufacturing, and continuously improving their smart decision-making in virtue of big-data analysis and sharing of smart manufacturing experiences;
data exchange between the global cloud-based smart service platforms, and between each said global cloud-based smart service platform and the systems or platforms it is docked with being performed using standardized, modularized, and secure interface and protocols by means of multiple-network link connection;
the global end customers acting as customer ends, the global part suppliers acting as supply ends, and manufacturers on the global production platforms registering to the global cloud-based smart service platforms and thereby receiving service; and
each said global production platform being composed of regional production platforms each having different product/sector attributes, providing global manufacturing service to the global manufacturers, and implementing global manufacturing, wherein each said regional production platform allows plural manufacturers having the same sector attribute to operate therein.

Preferably, each said cloud data pool synchronizes public data in a real-time manner, the public data including supply-demand data published by enterprises and service data provided by enterprises that are both collected by the global cloud-based smart service platforms, and experience data about smart manufacturing processes of the global production platforms, plus logistics data of the global logistic execution ends, wherein the public data are centrally processed using big-data analysis technologies through the smart information system service and the software service; the big-data analysis technologies applying artificial neural networks and genetic algorithm technologies to smart decision-making throughout supply chains of the global cloud-based smart service platforms, for continuous learning, analysis and improvement in decision-making conditions, decision-making effects and thinking methods during the enterprises' operations, thereby continuously perfecting the artificial neural network and the genetic algorithm, making the enterprises able to perform experiential self-evolution by continuously improving their smart manufacturing and smart decision-making through sharing of smart manufacturing experiences.

Preferably, the global security management system provides the global cellular service networks and all the service units with global information security service, including encrypted storage service defined by database data, identity authentication service based on digital certificates together with user-defined digital signatures; global trade in each said service unit and between the service units being performed by means of data encrypted transmission and blockchain technologies for information secrecy, security, integrity, and non-malleability; network isolation for all users' data being realized using overlay technologies, and network equipment and controllers that only make private data accessible to relevant users being used to ensure secrecy and security of sensitive data of the users such as individual enterprises.

Preferably, the global end customer registers to the global cloud-based smart service platforms and passes identity authentication thereby receiving service, the service including service for selecting and ordering products, service for checking production progress and logistic information of the ordered products, service for distribution at the global logistic execution ends, and service for making payment through the global payment systems connected to the platforms.

Preferably, the global part suppliers provides materials procured by the global manufacturers, registers to the global cloud-based smart service platforms and passes identity authentication thereby receiving service, the service including service for automatically receiving procurement orders for materials issued by the global production platforms or confirmed by the manufacturers, service for distribution at the global logistic execution ends, and service for receiving payment for the products through the global payment systems connected to the platforms.

Preferably, the global sale platform provides the global sale service, that includes displaying product information to the global manufacturers and allowing the global end customers to select, customize and order products, and accurately pushes product information of the global manufacturers to the customers through the global sale platforms according to big-data analysis of the smart information system service of the global cloud-based smart service platforms.

Preferably, the global payment system is composed of various payment platforms worldwide, allowing the customers to make payment for the products they order and allowing the enterprises to make payment for the materials they procure, and participates in the enterprises' identity authentication, so as to enable credit payment according to statistics and analysis of the customers' credit data.

Preferably, the global production platform is composed of n said regional production platforms having different product/sector attributes, each said regional production platform allowing plural manufacturers having the same sector attribute to operate therein to provide the global manufacturers with n types of global production platform service thereby achieving global manufacturing;
the regional production platforms including same-region same-attribute production platforms and different-region same-attribute production platforms, providing the manufacturers in the regional production platforms with smart industry service based on product order service, material procurement service, logistic service, payment service, smart information system service, and software service, the service all being provided in a modularized and standardized form upon the manufacturers' registration and application;
the same-region same-attribute production platform, being a production platform in which smart factories of manufacturers of the same sector attribute in a SME park, providing the manufacturers in the park with the smart industry service, including: production management service, real-time data-acquiring service, big-data analysis service, quality management service, material management service, smart distribution service, central lab service, human resource training & support service, automated & informatized service, R&D-center-based product R&D service, and R&D design & production service, and providing the manufacturers in the park with factory smart infrastructure/equipment, smart manufacturing equipment, and hardware for central warehouses; and
the different-region same-attribute production platform, being a group of enterprises or a production platform otherwise established outside the park, providing the group of enterprises or the production platform with the smart industry service, including: the production management service, the real-time data-acquiring service, the big-data analysis service, the quality management service, the material management service, the smart distribution service, human resources management service, and informatized service.

Preferably, the smart information system service includes a RTMS-server for providing service through a smart real-time monitoring system, the service including: real-time data-acquiring service and big-data analysis service;
the real-time data-acquiring service, interconnecting the smart manufacturing equipment and the factory smart infrastructure/equipment in all the smart factories through an execution end of the smart real-time monitoring system RTMS and automatically acquiring data so as to automatically control the factory smart infrastructure/equipment and the smart manufacturing equipment in a real-time manner, thereby achieving flexible production automation, and providing smart real-time monitoring service throughout manufacturing processes, for acquiring and maintaining data about relevant suppliers, materials, production management, quality management, real-time costs, logistics progress, finance, and human resources during the manufacturing processes, including smart manufacturing experience data, the real-time data-acquiring service further acquiring and monitoring market demand data, product sales data, material supply data, and logistic information data; and
the big-data analysis service performing big-data smart analysis based on the big data and smart manufacturing experience data acquired by the real-time data-acquiring service, so as to provide the enterprises with service for monitoring key nodes throughout factory operation in a real-time manner, service for centrally displaying statistical analysis information, service for 3D modeling and VR displaying production processes, and smart decision-making service, through which information of entire supply chains in the factories is displayed in a real-time manner, thereby ensuring that every part of the supply chains is timely controlled, and information from supply ends to demand ends is compiled and displayed in a real-time manner, thereby providing robust information service for the enterprises' timely feedback and adjustment and swift decision-making.

Preferably, the service for 3D modeling and VR displaying production processes includes building 3D models of the factories' the smart infrastructure/equipment, the factories' smart manufacturing equipment, the central warehouses, and smart logistic equipment through VR technologies, and incorporating the data acquired by the real-time data-acquiring service and data exchanged in a real-time manner by an information management system, so as to display real-time images throughout product production at the factories' in-house central monitoring platforms and/or remote clients by means of virtual reality, thereby constructing virtual factories for users to intuitively learn production progress of the products and operation of the equipment; and
the smart decision-making service, building virtual factories based on the service for 3D modeling and VR displaying production processes and the smart manufacturing experience data to simulate order execution, to simulate routing, and to simulate manufacturing processes.

Preferably, the information of the entire supply chains in the factories includes suppliers' states, supply of raw materials, logistic information, products' outputs and yields, production efficiency, quality states, real-time correction and prevention measures, real-time statistics, and human resource states; and
the real-time statistics providing information from the supply ends to the demand ends, including supplier information, man-hour efficiency information, real-time cost information, statistical analysis information on costs, statistical analysis information on quality states, statistical analysis information on correction and prevention measures, statistical analysis information on human resources, statistical analysis information on factory infrastructure, statistical analysis of logistic information, statistical analysis of manufacturing experience data, analytic statistics about demands for different products, and statistical analysis information on customers' satisfaction.

Preferably, the foregoing implementing the global procurement, global manufacturing, and global sale service is achieved through a process including the following steps:
Step 1: the global end customers accessing the global cloud-based smart service platforms to check information on products of different categories displayed on the global sale platforms, selecting the products they need to generate product orders or issuing personalized demands, and making payment for the products they ordered through the global payment systems;
Step 2: the global sale platforms automatically connecting to the production platforms of the same sector attribute according to the product/sector attributes of the ordered products, for the manufacturers belonging to the production platforms to confirm the product orders and generate corresponding material procurement orders, and then the manufacturers making payment for the material procurement orders through the global payment systems;
Step 3: the global cloud-based smart service platforms collecting all the product orders made by the global end customer on the global sale platform, automatically generating the material procurement orders according to big data smart analysis of the collected product data information of the global production platforms and information on the global part suppliers, executing global procurement, distributing the material procurement orders to relevant part suppliers, and assigning the product orders and the automatically generated material procurement orders to the manufacturers on the global production platforms that provide corresponding products, respectively, wherein if the products specified in the material procurement orders are in stock, the part suppliers supply the products to the relevant manufacturers requiring the materials through the global logistic execution ends, and the global payment systems automatically making payment to the relevant part suppliers after the manufacturers confirm receipt of the materials; and if the products are out of stock or in short, the global part suppliers turn into the global end customers, and the process returning to Step 1; and
Step 4: if the manufacturers are in the same-region same-attribute production platforms of the global production platforms, the manufacturers performing the manufacturing processes for the ordered product using the smart infrastructure/equipment and the smart manufacturing equipment of the factories on the platforms plus the production management service, the real-time data-acquiring service, the big-data analysis service, the quality management service, the central lab service, the automated & informatized service, the human resource training & support service, the R&D-center-based product R&D service, the material management service, and the smart distribution service of the smart industry service along with the smart information system service and the software service of the global cloud-based smart service platforms, so as to integrate the smart information systems into automated execution of industrial manufacturing, then the manufactured products being collected at central warehousing & logistic equipment of the regional production platforms and delivered to the customers through the smart distribution service, and the global payment system automatically making payment for the ordered products to the relevant manufacturers after the customers confirm receipt of the products; and
   if the manufacturers are in the different-region same-attribute production platforms of the global production platforms, the manufacturers performing the manufacturing processes for the ordered product using the smart infrastructure/equipment and the smart manufacturing equipment of their own factories plus the production management service, the real-time data-acquiring service, the big-data analysis service, the quality management service, the material management service, the smart distribution service, the human resources management service, and the informatized service of the platform smart industry service along with the smart information system service and the software service of the global cloud-based smart service platforms, then the manufactured products being delivered to the customers through the smart distribution service, and the global payment system automatically making payment for the ordered products to the relevant manufacturers after the customers confirm receipt of the products.

Preferably, the foregoing implementing the global manufacturing is achieved through a process including the following steps:
Step 1: in different regions worldwide, forming n regional production platforms that are digitized, informatized, and smartlized depending on sector attributes, each said regional production platform allowing plural manufacturers having the same sector attribute to operate therein, so as to form smart production platforms having large-enterprise scale;
Step 2: each said regional production platform being docked with the global cloud-based smart service platforms following standard platform interface and protocols defined by itself, the regional production platform containing three layers: an infrastructure equipment layer, a real-time data-acquiring & execution layer, and an information management layer, the regional production platform providing the manufacturers in the regional production platform with smart industry service including: real-time data-acquiring service, big-data analysis service, production management service, quality management service, central lab service, automated & informatized service, human resource training & support service, R&D-center-based product R&D service, material management service, and smart distribution service in virtue of combination of the infrastructure equipment layer, the real-time data-acquiring & execution layer, and the information management layer;
   the infrastructure equipment layer, for designing and forming digitized and smartlized factory infrastructure/equipment, central warehousing & logistic equipment, and smart manufacturing equipment for the manufacturers in the regional production platform to use;
   the real-time data-acquiring & execution layer performing smart infrastructure real-time acquiring & monitoring on the factory smart infrastructure/equipment of the infrastructure equipment layer and performing smart equipment information real-time acquiring & monitoring on the central warehousing & logistic equipment and the smart manufacturing equipment through execution ends of a smart real-time monitoring system RTMS, so as to achieve information interconnection among all the infrastructure and equipment in the platforms and realize smart monitoring, acquiring information on operation of the infrastructure and equipment in a real-time manner, and smartly controlling the equipment according to production plans, so as to facilitate flexible manufacturing, efficiency improvement, energy conservation, and consumption reduction, and performing real-time acquiring & monitoring of other information on the infrastructure equipment layer, wherein the real-time acquiring & monitoring provides smart real-time monitoring service throughout manufacturing processes, for acquiring and maintaining data about relevant suppliers, materials, production management, quality management, real-time costs, logistics progress, finance, and human resources during the manufacturing processes, smart manufacturing experience data, other manufacturing experience data, market demand data, product sales data, material supply data, and logistic information data;
   the information management layer, including an integrated smart information system module that comprises service ends of smart real-time monitoring systems RTMS, supplier management systems SCM, customer relationship management systems CRM, integrated product development systems IPD, enterprise resource planning ERP, manufacturing execution systems MES, smart advanced planning & scheduling systems APS, smart warehouse management systems WMS, and product life cycle management systems PLM, and performing flexible manufacturing based on big-data analysis and sharing of smart manufacturing experience data according to orders and smart production schedules, the smart information system being able to continuously learn and improve, so as to improve the manufacturers in the regional production platforms in terms of smart manufacturing and smart decision-making;
   the service ends of the smart real-time monitoring systems RTMS acquiring infrastructure, smart equipment, manufacturing processes information collected by execution ends of the smart real-time monitoring systems RTMS by means of releasing service, and displaying real-time images throughout product production at the factories' in-house central monitoring platforms and/or remote clients by means of virtual reality, for users to intuitively learn production progress of the products and operation of the equipment; and
   the integrated product development systems IPD providing the manufacturers in the regional production platforms with R&D service for products having optimized and personalized designs.

The technical schemes adopted by the present invention have the following beneficial effects:
1. The disclosed system provides a secure, trustable and consistent environment for global supply chains to operate, where high-efficiency whole-process service can be provided for end customers' ordering, global procurement of parts, global smart manufacturing, global payment, and global logistics, independent of time and place, thereby reducing product costs, ensuring product quality, and generating great social benefits.
2. With the global cloud-based smart service platform, end customers can get product service directly provided by manufacturers all over the world, so as to reduce product-buying costs, customize products, and receive accurate push service for product information, thereby improving shopping experience and satisfying their needs.
3. By joining the regional production platform, enterprises, and particularly small- and medium-sized enterprises, can use the global procurement, global sales, global logistic service, to reduce procurement costs, sales costs, and logistics costs, so as to rapidly develop themselves into businesses that own advanced manufacturing systems and can compete with large enterprises.
4. With the software service and the smart industry service (production management service, real-time data-acquiring service, big-data analysis service, quality management service, material management service, central lab service, human resource training & support service, automated & informatized service, R&D-center-based product R&D service, smart distribution service, etc.) provided by the global production platform, manufacturers all over the world can continuously making their smart manufacturing more informatized and more automated, thereby increasing manufacturing efficiency, improving product quality, and reducing operational costs by timely adjusting decision-making according to the big-data analysis service provided by the platforms.
5. With the excellent smart manufacturing service provided by the global production platform, manufacturers all over the world can ensure product quality, improve product competitiveness, and enhance brand benefits.
6. The global sale platform can accurately push product information to end customers according to the customers' demands based on big-data analysis, thereby providing quality products and improving customer experience.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
FIG. 1 is a structural diagram of a service unit according to the present invention;
FIG. 2 is a schematic drawing of a global cellular service network according to the present invention;
FIG. 3 is a block diagram illustrating service of a global smart manufacturing, sale and service system according to the present invention;
FIG. 4 is a flowchart of global procurement, global manufacturing, and global sale service according to a first embodiment of the present invention;
FIG. 5 is a flowchart of global procurement, global manufacturing, and global sale service according to a second embodiment of the present invention; and
FIG. 6 is a structural diagram of a global production platform according to the present invention.

### DETAILED DESCRIPTION OF THE INVENTION

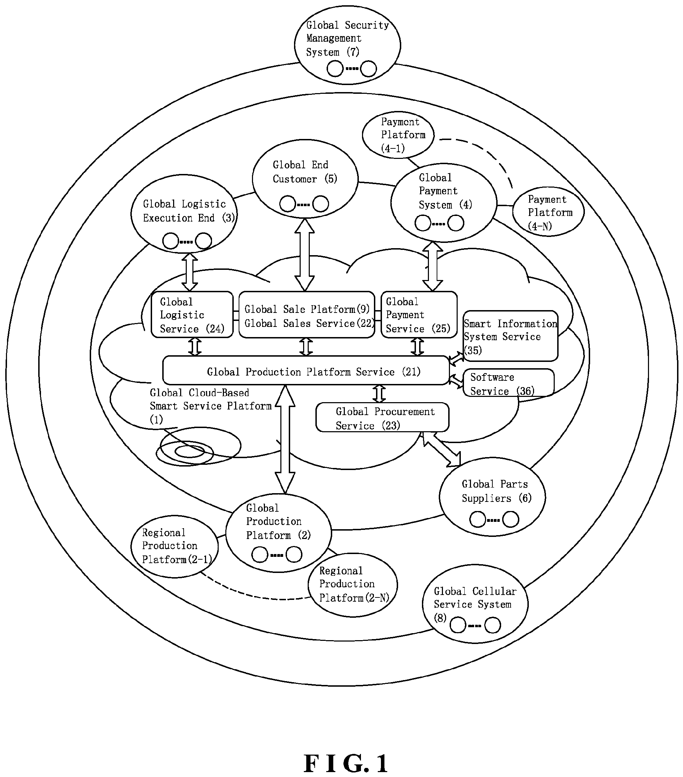

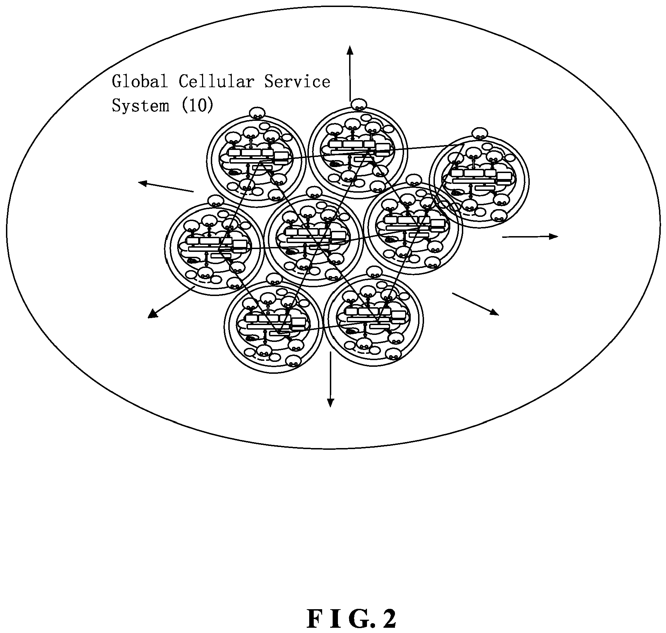

As shown in FIG. 1, in the present invention, a global smart manufacturing, sale and service system comprises a plurality of service units having global cloud-based smart service platforms 1. Each of the service units has a global cloud-based smart service platform 1, which realizes data exchange among the service units by means of multiple-network link connection following standard platform interface and protocols it defines. The service units construct, with a cellular architecture, a secure global cellular service network 10 that is continuously reproducible and expandable, and lays special emphasis on supply side management to demand side management, as shown in FIG. 2.

The service unit constructs the global cloud-based smart service platform 1 based on a global security management system 7 while ensuring secrecy, security, and availability of data. The global cloud-based smart service platform 1 is docked with global sale platforms 9, global production platforms 2, global end customers 5, global part suppliers 6, global logistic execution ends 3, and global payment systems 4 following standard platform interface and protocols it defines, a complete "from-the-demand-side-to-the- supply-side" supply chain system from the global end customers 5 to respective said independent global production platforms 2, global part suppliers 6, global sale platforms 9, and global logistic execution ends 3, and to integrate the global payment systems 4. The global payment systems 4 exchange information (e.g. enterprises' identity information, enterprises' credit information, enterprises' financial transaction information, and banking information) with the global cloud-based smart service platform 1, and ensure secrecy of the enterprises' information. The global cloud-based smart service platforms 1 provide the global production platforms 2 with global sale service 22, global procurement service 23, global production platform service 21, global logistic service 24, global payment service 25, smart information system service 35, software service (36) based on SaaS cloud service through the global sale platforms (9), the global part suppliers (6), the global logistic execution ends (3), and the global payment systems (4). The global cloud-based smart service platform (1) provides formation, operation & maintenance and on-/off-line comprehensive service of the global cloud-based smart service platforms (1) through the global cellular service systems (8). The global cloud-based smart service platforms (1) continuously perform self-evolution, continuously improve their global supply chain efficiency, continuously improve their smart manufacturing, and continuously improve their smart decision-making in virtue of big-data analysis and sharing of smart manufacturing experiences.

The global cloud-based smart service platform (1) is of a service-oriented distributed architecture, and continuously performs self-learning and improvement based on cloud data pools using big-data analysis to improve its capability to share smart manufacturing, in the secure information environment provided by the global security management system (7). The global end customers (5) acting as customer ends, the global part suppliers (6) acting as suppliers, and the manufacturers all register to the global cloud-based smart service platforms (1) so as to receive service. Data exchange between the global cloud-based smart service platforms (1), and between each said global cloud-based smart service platform (1) and the systems or platforms it is docked with is performed using standardized, modularized, and secure interface and protocols by means of multiple-network link connection, so as to form a global cellular service network that provides manufacturing sale service globally.

Each of the global cloud-based smart service platforms (1) has an independent cloud data pool. Each said cloud data pool synchronizes public data (e.g. supply-demand data published by enterprises and service data provided by enterprises that are both collected by the global cloud-based smart service platforms (1), and experience data about smart manufacturing processes of the global production platforms (2), plus logistics data of the global logistic execution ends (3)) in a real-time manner, wherein the public data are centrally processed using big-data analysis technologies through the smart information system service (35) and the software service (36). The big-data analysis technologies apply artificial neural networks and genetic algorithm technologies to smart decision-making throughout supply chains of the global cloud-based smart service platforms (1), for continuous learning, analysis and improvement in decision-making conditions, decision-making effects and thinking methods during the enterprises' operations, thereby continuously perfecting the artificial neural network and the genetic algorithm, making the enterprises able to perform experiential self-evolution by continuously improving their smart manufacturing and smart decision-making through sharing of smart manufacturing experiences.

The global security management system (7) provides the global cellular service network (10) and all the service units with global information security service (26), and provides a trustable, secure environment for the enterprises to use, including encrypted storage service defined by database data, identity authentication service based on digital certificates together with user-defined digital signatures. It uses data encrypted transmission and blockchain technologies to ensure secrecy, security, integrity and non-malleability of global trade information inside and among the service units. It uses overlay technologies to realize network isolation of all the user data, and uses network equipment and controllers that only make private data accessible to relevant users being used to ensure secrecy and security of sensitive data of the users such as individual enterprises. Third-party global information security institutions trusted by customers and authenticated can enter the global cloud-based smart service platform (1) to protect information security for the service units and the global cellular service networks.

The global end customer (5) that has registered to the global cloud-based smart service platforms (1) and passed identity authentication can receive service. The service includes service for selecting and ordering products, service for checking production progress and logistics information of the ordered products, service for distribution at the global logistic execution ends (3), and service for making payment through the global payment systems (4) connected to the platforms.

The global part supplier (6) provides materials procured by the global manufacturers. After registering to the global cloud-based smart service platforms (1) and passing identity authentication, it can receive service. The service includes service for automatically receiving procurement orders for materials issued by the global production platforms (2) or confirmed by the manufacturers, service for distribution at the global logistic execution ends (3), and service for receiving payment for the products through the global payment systems (4) connected to the platforms.

The global sale platform (9) provides global sale service (22), that includes displaying product information to the global manufacturers and allowing the global end customers (5) to select, customize and order products; accurately pushing product information of the global manufacturers to the customers through the global sale platforms (9) according to big-data analysis of the smart information system service (35) of the global cloud-based smart service platforms (1).

The global payment system (4) is composed of various payment platforms worldwide. It allows the customers to make payment for the products they order and allows the enterprises to make payment for the materials they procure, and participates in the enterprises' identity authentication, so as to enable credit payment according to statistics and analysis of the customers' credit data.

The global production platform (2) is composed of n said regional production platforms that have different product/sector attributes. Each said regional production platform allows plural manufacturers having the same sector attribute to operate therein to provide the global manufacturers with n types of global production platform service thereby achieving global manufacturing.

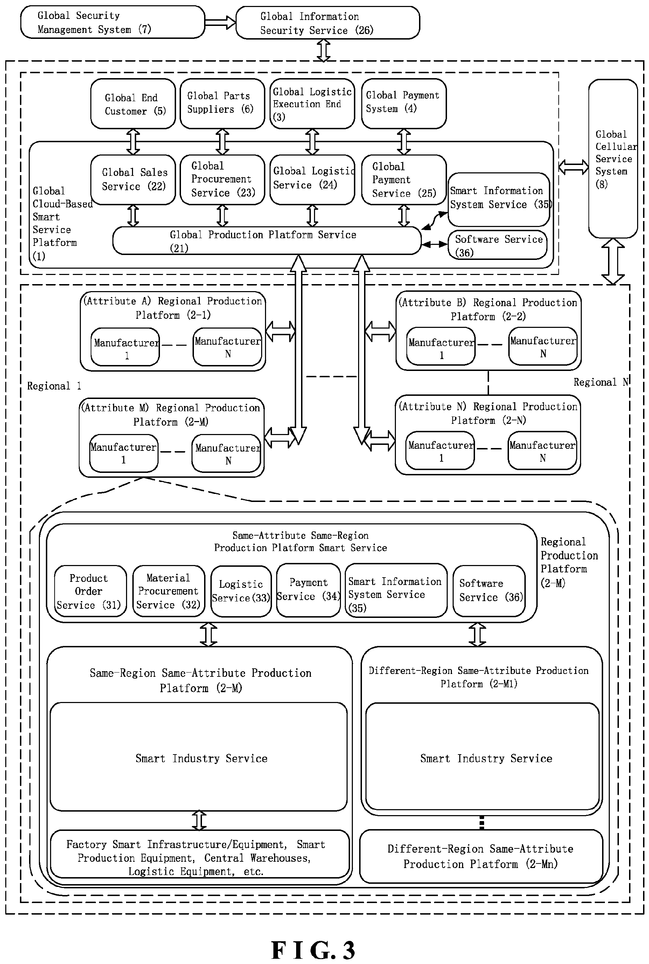

Referring to FIG. 3, the regional production platforms include same-region same-attribute production platforms and different-region same-attribute production platforms, providing the manufacturers in the regional production platforms with smart industry service (11) based on product order service (31), material procurement service (32), logistic service (33), payment service (34), smart information system service (35), and software service (36). The foregoing service is provided in a modularized and standardized form upon the manufacturers' registration and application.

In the same-region same-attribute production platform (being a production platform in which smart factories of manufacturers of the same sector attribute in a SME park), the smart industry service (11) provided includes: providing the manufacturers in the park with production management service (90), real-time data-acquiring service (98), big-data analysis service (99), quality management service (91), material management service (96), smart distribution service (97), central lab service (92), human resource training & support service (94), automated & informatized service (93), R&D-center-based product R&D service (95), R&D design & production service, and so on, and providing the manufacturers in the park with hardware such as factory smart infrastructure/equipment (57), smart manufacturing equipment (66), and central warehouses, so as to improve the SMEs' smart manufacturing capability, and realize advanced manufacturing systems that are both automated and informatized, thereby ensuring product quality and improving logistic efficiency.

In the different-region same-attribute production platform (being a group of enterprises or a production platform otherwise established outside the park), the smart industry service (11) provided includes: providing group enterprises or production platforms with production management service (90), real-time data-acquiring service (98), big-data analysis service (99), quality management service (91), material management service (96), smart distribution service (97), human resources management service, informatized service, and so on, so as to improve group enterprises and other enterprises in terms of smart manufacturing, and realize advanced manufacturing systems that are both automated and informatized, thereby ensuring product quality and improving logistic efficiency.

The smart information system service (35) includes but is not limited to a smart real-time monitoring system service RTMS-server. The smart real-time monitoring system service include: real-time data-acquiring service and big-data analysis service, each of which form core service of the smart industry service (11).

The real-time data-acquiring service interconnects all the smart manufacturing equipment (66) and factory smart infrastructure/equipment (57) of the smart factories through execution ends of the smart real-time monitoring system RTMS, and automatically acquires data so as to automatically control the factory smart infrastructure/equipment (57) and the smart manufacturing equipment (66) in a real-time manner, thereby achieving flexible production automation, and providing smart real-time monitoring service throughout manufacturing processes, for acquiring and maintaining data about relevant suppliers, materials, production management, quality management, real-time costs, logistics progress, finance, and human resources during the manufacturing processes, including smart manufacturing experience data. The foregoing information is exclusive and private to respective enterprises, and the enterprises decide whether to release particular data to the public at their own discretion. The real-time data-acquiring service further acquires and monitors market demand data, product sales data, material supply data, logistic information data and so on.

The factory smart infrastructure/equipment (57) and the smart manufacturing equipment (66) include but are not limited to real-time monitoring equipment for factory infrastructure, smart stereoscopic warehouses (63), smart floor stock inventory (64), automated guided vehicles, smart assembling and packing equipment (67), equipment for automated product tests, equipment for product reliability tests, and other automated equipment.

The big-data analysis service performs big-data smart analysis based on the big data and smart manufacturing experience data acquired by the real-time data-acquiring service (98), so as to provide the enterprises with service for monitoring key nodes throughout factory operation in a real-time manner, service for centrally displaying statistical analysis information, service for 3D modeling and VR displaying production processes, and smart decision-making service, through which information of entire supply chains in the factories is displayed in a real-time manner, thereby ensuring that every part of the supply chains is timely controlled, and information from supply ends to demand ends is compiled and displayed in a real-time manner, thereby providing robust information service for the enterprises' timely feedback and adjustment and swift decision-making.

The service for monitoring key nodes throughout factory operation in a real-time manner and the service for centrally displaying statistical analysis information are smart display terminal service based on big data. They centrally display real-time monitoring and statistical analysis data about the key nodes that are of the users' interests.

The service for 3D modeling and VR displaying production processes is the major way to present the statistical analysis service. It uses VR technologies to develop 3D models of the factory smart infrastructure/equipment (57), the smart manufacturing equipment (66), the central warehouses and the smart logistic equipment, and incorporates the data acquired by the real-time data-acquiring service (98) and the real-time data exchanged by the information management systems, so as to display real-time images throughout product production at the factories' in-house central monitoring platforms and/or remote clients by means of virtual reality, thereby constructing virtual factories for users to intuitively learn production progress of the products and operation of the equipment.

The smart decision-making service builds virtual factories based on the service for 3D modeling and VR displaying production processes and the smart manufacturing experience data to simulate order execution, to simulate routing, and to simulate manufacturing processes, thereby improving the enterprises' proactive decision-making capability.

The information of the entire supply chains in the factories includes suppliers' states, supply of raw materials, logistic information, products' outputs and yields, production efficiency, quality states, real-time correction and prevention measures, real-time statistics, and human resource states.

The real-time statistics provide information from the supply ends to the demand ends, including supplier information, man-hour efficiency information, real-time cost information, statistical analysis information on costs, statistical analysis information on quality states, statistical analysis information on correction and prevention measures, statistical analysis information on human resources, statistical analysis information on factory infrastructure, statistical analysis of logistic information, statistical analysis of manufacturing experience data, analytic statistics about demands for different products (e.g. regional distribution, customer composition, etc.), and statistical analysis information on customers' satisfaction.

The global cellular service system (8) serves to form, operate and maintain the global cloud-based smart service platform (1), to promote the service mode of the global smart manufacturing, sale and service system to the world, to construct cellular service networks, to promote and form the regional production platforms, to provide the manufacturers in the regional production platform with smart product manufacturing solutions, solutions for design and production of smart manufacturing equipment (66), and solutions for central warehousing & logistic equipment (100), thereby integrating the smart information system into automated industrial manufacturing flow.

All the data include supply-demand data released by various enterprises, data about provided service, data about smart manufacturing experiences and other experiences, logistics data of the global logistic execution ends, and confidential data for the enterprises' internal use. The enterprises may choose to release particular data to the public at its discretion.

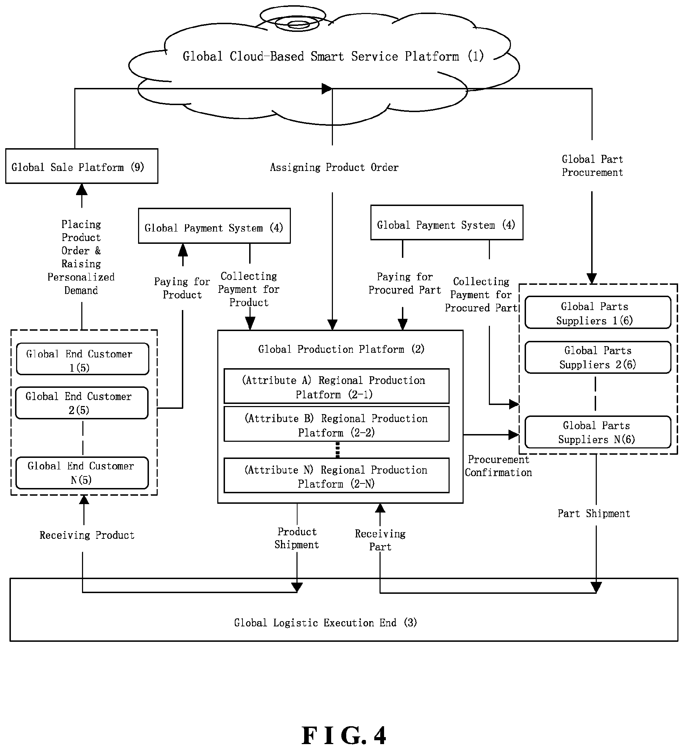

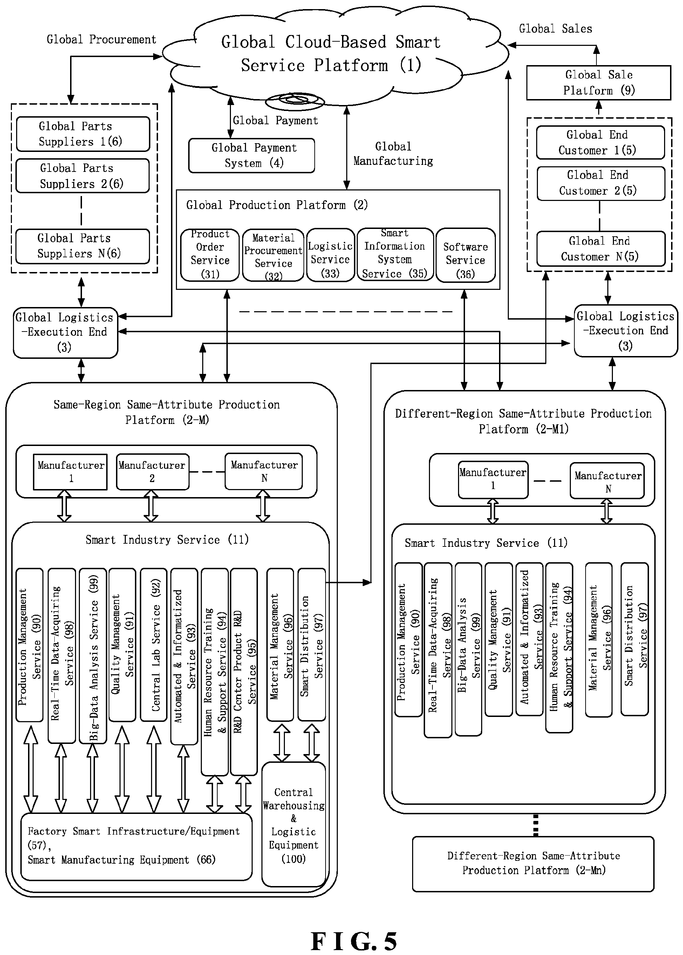

The disclosed global smart manufacturing, sale and service system implements its global procurement, global manufacturing, and global sale service through a process including the following steps as shown in FIG. 4 and FIG. 5:
Step 1, the global end customers (5) accessing and registering to the global cloud-based smart service platforms (1) to check and acquire information on products of different categories displayed on the global sale platforms (9), selecting the products they need to generate product orders or issuing personalized demands, and making payment for the products they ordered through the global payment systems (4);
Step 2, the global sale platforms (9) automatically connecting to the production platforms of the same sector attribute according to the product/sector attributes of the ordered products, for the manufacturers belonging to the production platforms to confirm the product orders and generate corresponding material procurement orders, and then the manufacturers making payment for the material procurement orders through the global payment systems (4);
Step 3, the global cloud-based smart service platforms (1) collecting all the product orders made by the global end customer (5) on the global sale platform (9), automatically generating the material procurement orders according to big data smart analysis of the collected product data information of the global production platforms (2) (including product manufacturer information, product BOM, regional production platform product stock information, material information, etc.) and information on the global part suppliers (6), executing global procurement, distributing the material procurement orders to relevant part suppliers, and assigning the product orders and the automatically generated material procurement orders to the manufacturers on the global production platforms (2) that provide corresponding products, respectively, wherein if the products specified in the material procurement orders are in stock, the part suppliers supply the products to the relevant manufacturers requiring the materials through the global logistic execution ends (3), and the global payment systems (4) automatically making payment to the relevant part suppliers after the manufacturers confirm receipt of the materials; and if the products are out of stock or in short, the global part suppliers (6) turn into the global end customers (5), and the process returning to Step 1; and
Step 4, if the manufacturers are in the same-region same-attribute production platforms of the global production platforms (2), the manufacturers performing the manufacturing processes for the ordered product using the smart infrastructure/equipment (57) and the smart manufacturing equipment (66) of the factories on the platforms plus the production management service (90), the real-time data-acquiring service (98), the big-data analysis service (99), the quality management service (91), the central lab service (92), the automated & informatized service (93), the human resource training & support service (94), the R&D-center-based product R&D service (95), the material management service (96), and the smart distribution service (97) of the smart industry service (11) along with the smart information system service (35) and the software service (36) of the global cloud-based smart service platforms (1), so as to integrate the smart information systems into automated execution of industrial manufacturing, then the manufactured products being collected at the central warehousing & logistic equipment (100) of the regional production platforms and delivered to the customers through the smart distribution service (97), and the global payment system (4) automatically making payment for the ordered products to the relevant manufacturers after the customers confirm receipt of the products; and
   if the manufacturers are in the different-region same-attribute production platforms of the global production platforms (2), the manufacturers performing the manufacturing processes for the ordered product using the smart infrastructure/equipment (57) and the smart manufacturing equipment (66) of their own factories plus the production management service (90), the real-time data-acquiring service (98), the big-data analysis service (99), the quality management service (91), the material management service (96), the smart distribution service (97), the human resources management service, and the informatized service of the platform smart industry service (11) along with the smart information system service (35) and the software service (36) of the global cloud-based smart service platforms (1), then the manufactured products being delivered to the customers through the smart distribution service (97), and the global payment system (4) automatically making payment for the ordered products to the relevant manufacturers after the customers confirm receipt of the products.

During the product manufacturing processes and logistics distribution, the customers can check production information and logistic information of the products in a real-time manner.

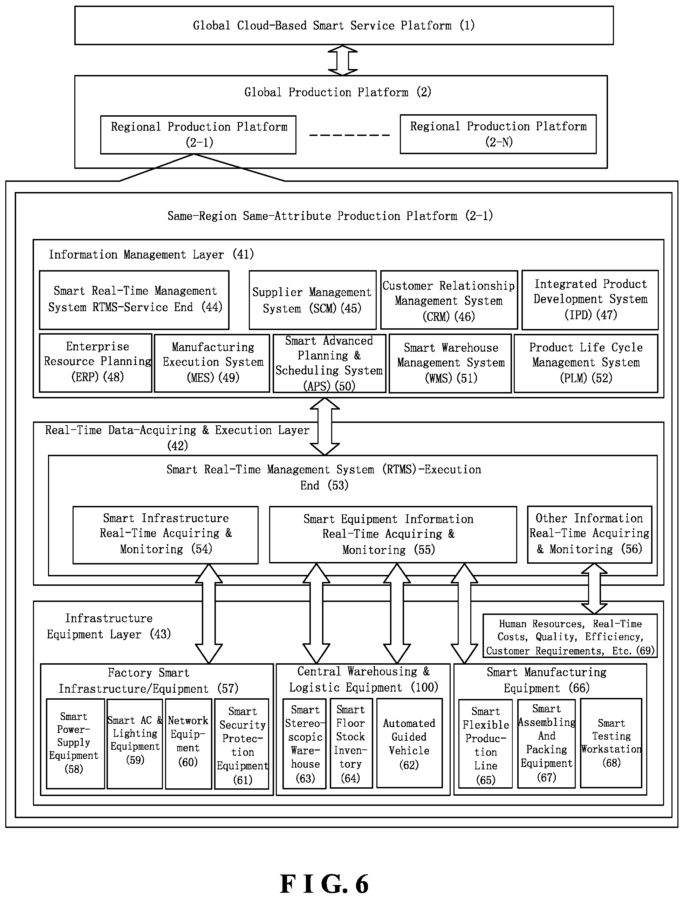

The disclosed global production platform (2) implements global manufacturing through a process including the following steps, as shown in FIG. 6:
Step 1, in different regions worldwide, forming n regional production platforms that are digitized, informatized, and smartlized depending on sector attributes, each said regional production platform allowing plural manufacturers having the same sector attribute to operate therein, so as to form smart production platforms having large-enterprise scale; and
Step 2, each said regional production platform being docked with the global cloud-based smart service platforms (1) following standard platform interface and protocols defined by itself, the regional production platform containing three layers: an infrastructure equipment layer (43), a real-time data-acquiring & execution layer (42), and an information management layer (41), the regional production platform providing the manufacturers in the regional production platform with smart industry service (11) including: real-time data-acquiring service (98), big-data analysis service (99), production management service (90), quality management service (91), central lab service (92), automated & informatized service (93), human resource training & support service (94), R&D-center-based product R&D service (95), material management service (96), and smart distribution service (97) in virtue of combination of the infrastructure equipment layer (43), the real-time data-acquiring & execution layer (42), and the information management layer (41), whereby the small- and medium-sized enterprises smart stationed here can have better manufacturing capability, and realize advanced manufacturing systems that are both automated and informatized, so as to ensure product quality and improve logistic efficiency;
   the infrastructure equipment layer (43), for designing and forming digitized and smartlized factory infrastructure/equipment (57) (including smart power-supply equipment (58), smart AC & lighting equipment (59), network equipment (60), smart security protection equipment (61) etc.), central warehousing & logistic equipment (100) (including smart stereoscopic warehouse (63), smart floor stock inventory (64) and automated guided vehicle (62) etc.) and smart manufacturing equipment (66) (including smart flexible production line (65), smart assembling and packing equipment (67) and smart testing workstation (68) etc.) for the manufacturers in the regional production platform to use, wherein the smart manufacturing equipment (66) uses registration codes and key authentication to ensure secure access to the networks, so that only the manufacturer holding a registration code and passing Ukey authentication can get the information system service, and information exchange is made by means of encrypted transmission, thereby ensuring secrecy and security of the manufacturers' information;
   the real-time data-acquiring & execution layer (42) performing smart infrastructure real-time acquiring & monitoring (54) on the factory smart infrastructure/equipment (57) of the infrastructure equipment layer (43) and performing smart equipment information real-time acquiring & monitoring (55) on the central warehousing & logistic equipment (100) and the smart manufacturing equipment (66) through execution ends (53) of a smart real-time monitoring system RTMS, so as to achieve information interconnection among all the infrastructure and equipment in the platforms and realize smart monitoring, acquiring information on operation of the infrastructure and equipment in a real-time manner, and smartly controlling the equipment according to production plans, so as to facilitate flexible manufacturing, efficiency improvement, energy conservation, and consumption reduction, and performing real-time acquiring & monitoring of other information (56) on the infrastructure equipment layer (43), wherein the real-time acquiring & monitoring (56) provides smart real-time monitoring service throughout manufacturing processes, for acquiring and maintaining data about relevant suppliers, materials, production management, quality management, real-time costs, logistics progress, finance, and human resources during the manufacturing processes, smart manufacturing experience data, other manufacturing experience data, market demand data, product sales data, material supply data, and logistic information data;
   the information management layer (41), including an integrated smart information system module that comprises service ends (44) of smart real-time monitoring systems RTMS, supplier management systems SCM (45), customer relationship management systems CRM (46), integrated product development systems IPD (47), enterprise resource planning ERP (48), manufacturing execution systems MES (49), smart advanced planning & scheduling systems APS (50), smart warehouse management systems WMS (51), and product life cycle management systems PLM (52), and performing flexible manufacturing based on big-data analysis and sharing of smart manufacturing experience data according to orders and smart production schedules, the smart information system being able to continuously learn and improve, so as to improve the manufacturers in the regional production platforms in terms of smart manufacturing and smart decision-making;
   the service ends (44) of the smart real-time monitoring systems RTMS acquiring infrastructure, smart equipment, manufacturing processes information collected by execution ends (53) of the smart real-time monitoring systems RTMS by means of releasing service, and displaying real-time images throughout product production at the factories' in-house central monitoring platforms and/or remote clients by means of virtual reality, for users to intuitively learn production progress of the products and operation of the equipment; and
   the integrated product development systems IPD (47) providing the manufacturers in the regional production platforms with R&D service for products having optimized and personalized designs.

With the foregoing technical schemes of the present invention, a global smart manufacturing, sale and service system that is informatized, digitized, and smartlized, and integrates globalized procurement, payment, smart manufacturing, sales and logistics distribution as a whole is realized. The service system has service units composed of global security management systems, global cloud-based smart service platforms (1), global end customers (5), global production platforms (2), global part suppliers (6), global sale platforms (9), global logistic execution ends (3), global payment systems (4), and global cellular service systems (8). Each of the service units serves a dedicate region in the world, and the global cloud-based smart service platform (1) of each said service unit acts as a core on which a secure global cellular service network (10) of a cellular architecture that is continuously reproducible and expandable is formed so as to serve globally.

Each of the service units, based on the global security management systems (7), ensures that the enterprises exclusively use their respective internal data with high secrecy, security, integrity and availability.

For each of the service unit, the global cloud-based smart service platform (1) is docked with a plurality of regional production platforms of different regions and sector attributes. The regional production platforms provide plural manufacturers in the same platform with smart industry service (11), smart information system service (35), and software service (36), so as to interconnect the smart manufacturing equipment (66), and the factory smart infrastructure/equipment (57) of all the smart factories, and acquire and maintain the data about the relevant suppliers, materials, production management, quality management, real-time costs, logistics progress, finance, and human resources throughout the manufacturing processes. The information of the entire supply chains in the factories is presented in a real-time manner, thereby ensuring that every part of the supply chains is timely controlled, and information from supply ends to demand ends is compiled and displayed in a real-time manner, thereby providing robust information service for the enterprises' timely feedback and adjustment and swift decision-making based on the big-data analysis service (99).

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A global smart manufacturing, sale and service system, being **characterized in**: comprising a plurality of continuously reproducible and expandable service units, each said service unit constructing and providing a global cellular service network (10) with a cellular architecture that implements global procurement, global manufacturing, and global sale service;
the service units being composed of global security management systems (7), global cloud-based smart service platforms (1), global end customers (5), global production platforms (2), global part suppliers (6), global sale platforms (9), global logistic execution ends (3), global payment systems (4), and global cellular service systems (8);
the service units constructing the global cloud-based smart service platforms (1) based on the global security management systems (7) while ensuring secrecy, security and availability of data, the global cloud-based smart service platforms (1) being docked with the global sale platforms (9), the global production platforms (2), the global end customers (5), the global part suppliers (6), the global logistic execution ends (3), and the global payment systems (4) based on cloud data pools with a service-oriented distributed architecture, so as to integrate a complete "from-the-demand-side-to-the-supply-side" supply chain system from the global end customers (5) to respective said independent global production platforms (2), global part suppliers (6), global sale platforms (9), and global logistic execution ends (3) and to integrate the global payment systems (4) enabling global payment; the global cloud-based smart service platforms (1) providing global sale service (22), global procurement service (23), global production platform service (21), global logistic service (24), global payment service (25), smart information system service (35), and software service (36) that are based on SaaS cloud service to the global production platforms (2) through the global sale platforms (9), the global part suppliers (6), the global logistic execution ends (3), and the global payment systems (4); the global cloud-based smart service platforms (1) providing formation, operation & maintenance and on-/off-line comprehensive service of the global cloud-based smart service platforms (1) through the global cellular service systems (8); the global cloud-based smart service platforms (1) continuously performing self-evolution, continuously improving their global supply chain efficiency, continuously improving their smart manufacturing, and continuously improving their smart decision-making in virtue of big-data analysis and sharing of smart manufacturing experiences;
data exchange between the global cloud-based smart service platforms (1), and between each said global cloud-based smart service platform (1) and the systems or platforms it is docked with being performed using standardized, modularized, and secure interface and protocols by means of multiple-network link connection;
the global end customers (5) acting as customer ends, the global part suppliers (6) acting as supply ends, and manufacturers on the global production platforms (2) registering to the global cloud-based smart service platforms (1) and thereby receiving service; and
each said global production platform (2) being composed of regional production platforms each having different product/sector attributes, providing global manufacturing service to the global manufacturers, and implementing global manufacturing, wherein each said regional production platform allows plural manufacturers having the same sector attribute to operate therein.

2. The global smart manufacturing, sale and service system of claim 1, being **characterized in**:
each said cloud data pool synchronizing public data in a real-time manner, the public data including supply-demand data published by enterprises and service data provided by enterprises that are both collected by the global cloud-based smart service platforms (1), and experience data about smart manufacturing processes of the global production platforms (2), plus logistics data of the global logistic execution ends (3), wherein the public data are centrally processed using big-data analysis technologies through the smart information system service (35) and the software service (36); the big-data analysis technologies applying artificial neural networks and genetic algorithm technologies to smart decision-making throughout supply chains of the global cloud-based smart service platforms (1), for continuous learning, analysis and improvement in decision-making conditions, decision-making effects and thinking methods during the enterprises' operations, thereby continuously perfecting the artificial neural network and the genetic algorithm, making the enterprises able to perform experiential self-evolution by continuously improving their smart manufacturing and smart decision-making through sharing of smart manufacturing experiences.

3. The global smart manufacturing, sale and service system of claim 1, being **characterized in**:
the global security management system (7), providing the global cellular service networks (10) and all the service units with global information security service (26), including encrypted storage service defined by database data, identity authentication service based on digital certificates together with user-defined digital signatures; global trade in each said service unit and between the service units being performed by means of data encrypted transmission and blockchain technologies for information secrecy, security, integrity, and non-malleability; network isolation for all users' data being realized using overlay technologies, and network equipment and controllers that only make private data accessible to relevant users being used to ensure secrecy and security of sensitive data of the users such as individual enterprises;
the global end customer (5) registering to the global cloud-based smart service platforms (1) and passing identity authentication thereby receiving service, the service including service for selecting and ordering products, service for checking production progress and logistic information of the ordered products, service for distribution at the global logistic execution ends (3), and service for making payment through the global payment systems (4) connected to the platforms;
the global part suppliers (6), providing materials procured by the global manufacturers, registering to the global cloud-based smart service platforms (1) and passing identity authentication thereby receiving service, the service including service for automatically receiving procurement orders for materials issued by the global production platforms (2) or confirmed by the manufacturers, service for distribution at the global logistic execution ends (3), and service for receiving payment for the products through the global payment systems (4) connected to the platforms;
the global sale platform (9) providing the global sale service (22) that includes displaying product information to the global manufacturers and allowing the global end customers (5) to select, customize and order products; accurately pushing product information of the global manufacturers to the customers through the global sale platforms (9) according to big-data analysis of the smart information system service (35) of the global cloud-based smart service platforms (1); and
the global payment system (4), composed of various payment platforms worldwide, allowing the customers to make payment for the products they order and allowing the enterprises to make payment for the materials they procure, and participating in the enterprises' identity authentication, so as to enable credit payment according to statistics and analysis of the customers' credit data.

4. The global smart manufacturing, sale and service system of claim 1, being **characterized in**:
the global production platforms (2), composed of n said regional production platforms having different product/sector attributes, each said regional production platform allowing plural manufacturers having the same sector attribute to operate therein to provide the global manufacturers with n types of global production platform service thereby achieving global manufacturing;
the regional production platforms including same-region same-attribute production platforms and different-region same-attribute production platforms, providing the manufacturers in the regional production platforms with smart industry service (11) based on product order service (31), material procurement service (32), logistic service (33), payment service (34), smart information system service (35), and software service (36), the service all being provided in a modularized and standardized form upon the manufacturers' registration and application;
the same-region same-attribute production platform, being a production platform in which smart factories of manufacturers of the same sector attribute in a SME park, providing the manufacturers in the park with the smart industry service (11) including: production management service (90), real-time data-acquiring service (98), big-data analysis service (99), quality management service (91), material management service (96), smart distribution service (97), central lab service (92), human resource training & support service (94), automated & informatized service (93), R&D-center-based product R&D service (95), and R&D design & production service, and providing the manufacturers in the park with factory smart infrastructure/equipment (57), smart manufacturing equipment (66), and hardware for central warehouses; and
the different-region same-attribute production platform, being a group of enterprises or a production platform otherwise established outside the park, providing the group of enterprises or the production platform with the smart industry service (11), including: the production management service (90), the real-time data-acquiring service (98), the big-data analysis service (99), the quality management service (91), the material management service (96), the smart distribution service (97), human resources management service, and informatized service.

5. The global smart manufacturing, sale and service system of claim 4, being **characterized in**:
the smart information system service (35), including a RTMS-server for providing service through a smart real-time monitoring system, the service including: real-time data-acquiring service (98) and big-data analysis service (99);
the real-time data-acquiring service (98), interconnecting the smart manufacturing equipment (66) and the factory smart infrastructure/equipment (57) in all the smart factories through an execution end (53) of the smart real-time monitoring system RTMS and automatically acquiring data so as to automatically control the factory smart infrastructure/equipment (57) and the smart manufacturing equipment (66) in a real-time manner, thereby achieving flexible production automation, and providing smart real-time monitoring service throughout manufacturing processes, for acquiring and maintaining data about relevant suppliers, materials, production management, quality management, real-time costs, logistics progress, finance, and human resources during the manufacturing processes, including smart manufacturing experience data, the real-time data-acquiring service further acquiring and monitoring market demand data, product sales data, material supply data, and logistic information data; and
the big-data analysis service (99) performing big-data smart analysis based on the big data and smart manufacturing experience data acquired by the real-time data-acquiring service (98), so as to provide the enterprises with service for monitoring key nodes throughout factory operation in a real-time manner, service for centrally displaying statistical analysis information, service for 3D modeling and VR displaying production processes, and smart decision-making service, through which information of entire supply chains in the factories is displayed in a real-time manner, thereby ensuring that every part of the supply chains is timely controlled, and information from supply ends to demand ends is compiled and displayed in a real-time manner, thereby providing robust information service for the enterprises' timely feedback and adjustment and swift decision-making.

6. The global smart manufacturing, sale and service system of claim 5, being **characterized in**:
the service for 3D modeling and VR displaying production processes: building 3D models of the factories' the smart infrastructure/equipment (57), the factories' smart manufacturing equipment (66), the central warehouses, and smart logistic equipment through VR technologies, and incorporating the data acquired by the real-time data-acquiring service and data exchanged in a real-time manner by an information management system, so as to display real-time images throughout product production at the factories' in-house central monitoring platforms and/or remote clients by means of virtual reality, thereby constructing virtual factories for users to intuitively learn production progress of the products and operation of the equipment; and
the smart decision-making service, building virtual factories based on the service for 3D modeling and VR displaying production processes and the smart manufacturing experience data to simulate order execution, to simulate routing, and to simulate manufacturing processes.

7. The global smart manufacturing, sale and service system of claim 5, being **characterized in**:
the information of the entire supply chains in the factories, including suppliers' states, supply of raw materials, logistic information, products' outputs and yields, production efficiency, quality states, real-time correction and prevention measures, real-time statistics, and human resource states; and
the real-time statistics providing information from the supply ends to the demand ends, including supplier information, man-hour efficiency information, real-time cost information, statistical analysis information on costs, statistical analysis information on quality states, statistical analysis information on correction and prevention measures, statistical analysis information on human resources, statistical analysis information on factory infrastructure, statistical analysis of logistic information, statistical analysis of manufacturing experience data, analytic statistics about demands for different products, and statistical analysis information on customers' satisfaction.

8. The global smart manufacturing, sale and service system of claim 1, being **characterized in**: implementing the global procurement, global manufacturing, and global sale service through a process including the following steps:
Step 1: the global end customers (5) accessing the global cloud-based smart service platforms (1) to check information on products of different categories displayed on the global sale platforms (9), selecting the products they need to generate product orders or issuing personalized demands, and making payment for the products they ordered through the global payment systems (4);
Step 2: the global sale platforms (9) automatically connecting to the production platforms of the same sector attribute according to the product/sector attributes of the ordered products, for the manufacturers belonging to the production platforms to confirm the product orders and generate corresponding material procurement orders, and then the manufacturers making payment for the material procurement orders through the global payment systems (4);
Step 3: the global cloud-based smart service platforms (1) collecting all the product orders made by the global end customer (5) on the global sale platform (9), automatically generating the material procurement orders according to big data smart analysis of the collected product data information of the global production platforms (2) and information on the global part suppliers (6), executing global procurement, distributing the material procurement orders to relevant part suppliers, and assigning the product orders and the automatically generated material procurement orders to the manufacturers on the global production platforms (2) that provide corresponding products, respectively, wherein if the products specified in the material procurement orders are in stock, the part suppliers supply the products to the relevant manufacturers requiring the materials through the global logistic execution ends (3), and the global payment systems (4) automatically making payment to the relevant part suppliers after the manufacturers confirm receipt of the materials; and if the products are out of stock or in short, the global part suppliers (6) turn into the global end customers (5), and the process returning to Step 1; and
Step 4: if the manufacturers are in the same-region same-attribute production platforms of the global production platforms (2), the manufacturers performing the manufacturing processes for the ordered product using the smart infrastructure/equipment (57) and the smart manufacturing equipment (66) of the factories on the platforms plus the production management service (90), the real-time data-acquiring service (98), the big-data analysis service (99), the quality management service (91), the central lab service (92), the automated & informatized service (93), the human resource training & support service (94), the R&D-center-based product R&D service (95), the material management service (96), and the smart distribution service (97) of the smart industry service (11) along with the smart information system service (35) and the software service (36) of the global cloud-based smart service platforms (1), so as to integrate the smart information systems into automated execution of industrial manufacturing, then the manufactured products being collected at central warehousing & logistic equipment (100) of the regional production platforms and delivered to the customers through the smart distribution service (97), and the global payment system (4) automatically making payment for the ordered products to the relevant manufacturers after the customers confirm receipt of the products; and
if the manufacturers are in the different-region same-attribute production platforms of the global production platforms (2), the manufacturers performing the manufacturing processes for the ordered product using the smart infrastructure/equipment (57) and the smart manufacturing equipment (66) of their own factories plus the production management service (90), the real-time data-acquiring service (98), the big-data analysis service (99), the quality management service (91), the material management service (96), the smart distribution service (97), the human resources management service, and the informatized service of the platform smart industry service (11) along with the smart information system service (35) and the software service (36) of the global cloud-based smart service platforms (1), then the manufactured products being delivered to the customers through the smart distribution service (97), and the global payment system (4) automatically making payment for the ordered products to the relevant manufacturers after the customers confirm receipt of the products.

9. The global smart manufacturing, sale and service system of claim 1, being **characterized in**: implementing the global manufacturing being achieved through a process including the following steps:
Step 1: in different regions worldwide, forming n regional production platforms that are digitized, informatized, and smartlized depending on sector attributes, each said regional production platform allowing plural manufacturers having the same sector attribute to operate therein, so as to form smart production platforms having large-enterprise scale; and
Step 2: each said regional production platform being docked with the global cloud-based smart service platforms (1) following standard platform interface and protocols defined by itself, the regional production platform containing three layers: an infrastructure equipment layer (43), a real-time data-acquiring & execution layer (42), and an information management layer (41), the regional production platform providing the manufacturers in the regional production platform with smart industry service (11) including: real-time data-acquiring service (98), big-data analysis service (99), production management service (90), quality management service (91), central lab service (92), automated & informatized service (93), human resource training & support service (94), R&D-center-based product R&D service (95), material management service (96), and smart distribution service (97) in virtue of combination of the infrastructure equipment layer (43), the real-time data-acquiring & execution layer (42), and the information management layer (41);
the infrastructure equipment layer (43), for designing and forming digitized and smartlized factory infrastructure/equipment (57), central warehousing & logistic equipment (100), and smart manufacturing equipment (66) for the manufacturers in the regional production platform to use;
the real-time data-acquiring & execution layer (42) performing smart infrastructure real-time acquiring & monitoring (54) on the factory smart infrastructure/equipment (57) of the infrastructure equipment layer (43) and performing smart equipment information real-time acquiring & monitoring (55) on the central warehousing & logistic equipment (100) and the smart manufacturing equipment (66) through execution ends (53) of a smart real-time monitoring system RTMS, so as to achieve information interconnection among all the infrastructure and equipment in the platforms and realize smart monitoring, acquiring information on operation of the infrastructure and equipment in a real-time manner, and smartly controlling the equipment according to production plans, so as to facilitate flexible manufacturing, efficiency improvement, energy conservation, and consumption reduction, and performing real-time acquiring & monitoring of other information (56) on the infrastructure equipment layer (43), wherein the real-time acquiring & monitoring (56) provides smart real-time monitoring service throughout manufacturing processes, for acquiring and maintaining data about relevant suppliers, materials, production management, quality management, real-time costs, logistics progress, finance, and human resources during the manufacturing processes, smart manufacturing experience data, other manufacturing experience data, market demand data, product sales data, material supply data, and logistic information data;
the information management layer (41), including an integrated smart information system module that comprises service ends (44) of smart real-time monitoring systems RTMS, supplier management systems SCM (45), customer relationship management systems CRM (46), integrated product development systems IPD (47), enterprise resource planning ERP (48), manufacturing execution systems MES (49), smart advanced planning & scheduling systems APS (50), smart warehouse management systems WMS (51), and product life cycle management systems PLM (52), and performing flexible manufacturing based on big-data analysis and sharing of smart manufacturing experience data according to orders and smart production schedules, the smart information system being able to continuously learn and improve, so as to improve the manufacturers in the regional production platforms in terms of smart manufacturing and smart decision-making;
the service ends (44) of the smart real-time monitoring systems RTMS acquiring infrastructure, smart equipment, manufacturing processes information collected by execution ends (53) of the smart real-time monitoring systems RTMS by means of releasing service, and displaying real-time images throughout product production at the factories' in-house central monitoring platforms and/or remote clients by means of virtual reality, for users to intuitively learn production progress of the products and operation of the equipment; and
the integrated product development systems IPD (47) providing the manufacturers in the regional production platforms with R&D service for products having optimized and personalized designs.
